(19) Europäisches Patentamt
European Patent Office
Office européen des brevets

(11) **EP 1 239 375 B1**

(12) **EUROPÄISCHE PATENTSCHRIFT**

(45) Veröffentlichungstag und Bekanntmachung des Hinweises auf die Patenterteilung:
**07.05.2014 Patentblatt 2014/19**

(51) Int Cl.:
***G06F 17/30*** *(2006.01)*

(21) Anmeldenummer: **01105814.6**

(22) Anmeldetag: **08.03.2001**

(54) **Verfahren zum Konvertieren von Dokumenten**

Document conversion process

Procédé de conversion de documents

(84) Benannte Vertragsstaaten:
**AT BE CH CY DE DK ES FI FR GB GR IE IT LI LU MC NL PT SE TR**

(43) Veröffentlichungstag der Anmeldung:
**11.09.2002 Patentblatt 2002/37**

(73) Patentinhaber: **SAP AG**
**69190 Walldorf (DE)**

(72) Erfinder: **Stuhec, Gunther**
**69117 Heidelberg (DE)**

(74) Vertreter: **Müller-Boré & Partner Patentanwälte PartG mbB**
**Friedenheimer Brücke 21**
**80639 München (DE)**

(56) Entgegenhaltungen:
**WO-A-00/20985      US-A- 5 119 465**
**US-A- 5 911 074**

• **PATENT ABSTRACTS OF JAPAN vol. 1997, no. 03, 31. März 1997 (1997-03-31) & JP 08 297565 A (FUJITSU LTD), 12. November 1996 (1996-11-12)**

**Beschreibung**

Die vorliegende Erfindung betrifft ein Verfahren zum Konvertieren von Dokumenten, insbesondere zum Konvertieren von Geschäftsdokumenten, die über ein elektronisches Netzwerk übertragen werden und die Erstellung und Anpassung von Definitionen, auf deren Grundlage die Konvertierung durchgeführt werden kann.

Mit bekannten Datenverarbeitungsprogrammen können unterschiedlichste Arten von Dokumenten erstellt und verarbeitet werden. Diese Dokumente können dann von anderen Nutzern, die die gleiche Version des Datenverarbeitungsprogramms verwenden, weiterverarbeitet werden.

Durch die Verwendung von Kommunikationsnetzen wird es immer einfacher solche Daten in einem Dokument in dem von dem Datenverarbeitungsprogramm verwendeten Format auszutauschen. Da der Empfänger solcher Daten aber häufig ein anderes Datenverarbeitungsprogramm, oder eine andere Version eines solchen Programms, verwendet, kann es Probleme bei der Darstellung des Dokuments und damit der Daten geben.

Eine Verwendung, bei der dieses Problem insbesondere auftritt, ist der Austausch von strukturierten elektronischen Geschäftsdokumenten zwischen Unternehmen mit Electronic Data Interchange (EDI). Um einen solchen Austausch von Geschäftsdokumenten zu ermöglichen, ist die Festlegung eines Standards bzw. Formats für die Struktur der elektronischen Dokumente notwendig, damit diese von dem jeweiligen Empfänger richtig verarbeitet werden können. Für EDI gibt es eine Vielzahl unterschiedlicher, inkompatibler Formate, wobei beispielsweise verschiedene Branchen, verschiedene Nationen, aber auch verschiedene Unternehmen ihr eigenes Format verwenden.

Um solche Daten problemlos austauschen zu können sind sogenannte Konvertierungsregeln notwendig. Diese Konvertierungsregeln ermöglichen das Konvertieren von Dokumenten in einem ersten Format, beispielsweise einem bestimmten EDI-Standard, in ein zweites Format, so daß das Dokument von einem Empfänger, der einen anderen EDI-Standard verwendet weiterverarbeitet werden kann. Dabei müssen für jede Kombination zwischen zwei Formaten und deren Versionen eigene Konvertierungsregeln geschrieben werden. Diese Erstellung von Konvertierungsregeln ist sehr aufwendig und kostenintensiv.

Dokument US 5,911,074 A bezieht sich auf ein Verfahren zum Manipulieren von Datenmodellen, um Datenmodelle zwischen verschiedenen Softwäreentwicklungstools austauschen zu können. Ein Datenmodell wird dabei über ein "gateway" von einem Format in eine anderes Format über ein "neutral intermediate format" übersetzt.

Eine Aufgabe der vorliegenden Erfindung ist es deshalb ein Verfahren zur Erstellung von Definitionen bereitzustellen, auf deren Grundlage die Konvertierung zwischen verschiedenen Formaten durchgeführt werden kann. Dabei soll die Erfahrung, die aus der Konvertierung von anderen Formaten vorhanden ist, verwandt werden. Eine weitere Aufgabe der vorliegenden Erfindung ist es ein Verfahren und ein System bereitzustellen, mit dem auf einfache Weise Dokumente in einem ersten Format in ein zweites Format konvertiert werden können.

Erfindungsgemäß werden diese Aufgaben durch ein Verfahren gemäß Anspruch 1 zur Anpassung von MasterSchemaDefinitionen zur Konvertierung mindestens eines Dokuments mit Informationen in einem ersten Format in ein zweites Format in einem Computer-System gelöst, wobei das Computer-System einen Prozessor, einen Speicher und eine Eingangs-/Ausgangsschnittstelle enthält, und wobei das mindestens eine Dokument mindestens ein Formatspezifisches Datenelement aufweist, wobei die Informationen des Dokuments in dem mindestens einen Datenelement angeordnet sind. Im Rahmen der vorliegenden Erfindung beinhaltet jede MasterSchemaDefinition mindestens eine Zuordnung zwischen mindestens einem Datenelement eines MasterSchemas und jeweils mindestens einem Datenelement von mindestens einem anderen Format. Das Computer-System ordnet Datenelemente von neuen Formaten unter Verwendung einer Entscheidungsfunktion den entsprechenden Datenelementen des MasterSchemas zu und paßt damit diejenigen MasterSchemaDefinitionen an ihre erweiterte Verwendung, für das neue Format, an, die die Zuordnungen für die betreffenden Datenelemente beinhalten.

Im Rahmen der vorliegenden Erfindung wird eine sogenannte MasterSchemaDefinition angepaßt um eine Konvertierung von einem ersten Format in ein zweites Format zu ermöglichen. Bei diesen zu konvertierenden Dokumenten handelt es sich um elektronische Dokumente. Diese elektronischen Dokumente weisen bestimmte Formate auf. Dabei bezeichnet der Begriff Format eine Vielzahl von Kriterien und Anforderungen, die an den Inhalt, die Struktur und das Layout eines Dokuments gestellt werden. Es gibt Formate, die von öffentlichen Standardisierungsgremien erstellt wurden und solche, die den Anforderungen eines einzelnen Benutzers oder eines Anwendungsprogramms entsprechen. Bei den zu konvertierenden Dokumenten handelt es sich beispielsweise um sogenannte Geschäftsdokumente, wie zum Beispiel Rechnungen, Lieferscheine, Bestellungen, Überweisungen oder Kataloge.

Es gibt beispielsweise Formate, die bestimmte Anforderungen an den Inhalt des Dokuments stellen. So kann ein Format beispielsweise speziell für Rechnungen ausgelegt sein und deshalb bestimmte Inhalte wie Rechnungsanschrift, Artikelnummern, Anzahl der Artikel und Preise verlangen.

Die einzelnen Dokumente weisen außerdem eine von dem Format abhängige Struktur auf. Ein derartiges Dokument kann beispielsweise in sogenannte Absätze, Sätze, Wörtergruppen und in Wörter unterteilt werden. Dabei werden in den Absätzen Geschäftsdokumente oder Satzgruppen definiert, in den Sätzen mehrere Datenelemente oder Datenelementgruppen, in den Wörtergruppen Datenelemente, die informell zusammen gehören und in den Wörtern die Datenelemente. Die international für Absatz, Satz, Wörtergruppe und Wort verwendeten Begriffe sind loop, segment, composite und element. Diese Struktur kann beispielsweise in einem Baumdiagramm mit Hilfe von Knoten für loop, segment, composite und element dargestellt werden. Durch diese vier Knotentypen und deren Anordnung ist es möglich alle erdenklichen Geschäftsdokumente in ihren verschiedenen Strukturen aufzubauen. Bezogen auf das oben genannte Beispiel können die für eine Rechnung notwendigen Daten in einem Absatz angeordnet sein, wobei die Rechnungsanschrift beispielsweise einen Satz bildet, die Straße mit Hausnummer eine Wörtergruppe und die Hausnummer ein einzelnes Wort. In den Wörtern bzw. in den Elementen befindet sich also die eigentliche Information des Dokuments. Diese Knoten, d.h. die Wörter werden deshalb im folgenden als Datenelemente bezeichnet. Die Information der Wörter kann durch sogenannte kodierte Werte weiter spezifiziert werden. Mit einem kodierten Wert wird dann beispielsweise angegeben, ob es sich bei der Liefermenge um eine Stückzahl, oder um eine Gewichtsangabe handelt. Im Rahmen der vorliegenden Erfindung können die Geschäftsdokumente auch andere Strukturen aufweisen. Die Geschäftsdokumente können beispielsweise auch mit Hilfe von lediglich zwei Knotentypen strukturiert sein, wobei der eine Knotentyp die eigentlichen Informationen beinhaltet und mit Hilfe des anderen Knotentyps alle anderen Ebenen des Geschäftsdokuments dargestellt werden.

Die unterschiedlichen Formate haben darüber hinaus noch unterschiedliche Anforderungen an das Layout der Dokumente. Dies bedeutet beispielsweise, daß die gleiche Information in unterschiedlichen Formaten an unterschiedlichen Positionen dargestellt wird.

Wie bereits oben beschrieben, befinden sich die eigentlichen Informationen des Dokuments in den Datenelementen. Diese Datenelemente bilden die kleinste logische Einheit innerhalb der Struktur. Es können beispielsweise Klartext-Datenelemente, numerische Datenelemente und kodierte Datenelemente unterschieden werden. Klartext-Datenelemente können beispielsweise der Darstellung von Namen, freien Texten, Beschreibungen und Erläuterungen dienen. Darunter fallen zum Beispiel Namen aller Art, Nummern mit alphanumerischen Zeichen, Produktbeschreibungen und nicht kodierte Beschreibungen. Im Gegensatz dazu können mit numerischen Datenelementen nur numerische Werte und Beträge dargestellt werden. Dabei können die Werte unterschiedlichen Datentypen entsprechen, wie beispielsweise float, integer und dezimal. Kodierte Elemente sind Datenelemente, die bestimmte Werte in einer einheitlichen normierten Form darstellen. Diese einheitliche Form wird durch die einzelnen Standard bzw. Formatverzeichnisse vorgegeben. Beispiele für solche standardisierten Werte sind Ländercodes, Währungsdarstellungen und Maß-, Größen- und Gewichtseinheiten.

Die Umwandlung eines Dokuments in einem ersten Format in ein Dokument mit entsprechendem Inhalt in einem anderen Format wird als Konvertierung bezeichnet. Das Ziel einer Konvertierung ist die möglichst genaue Abbildung des Inhalts beziehungsweise der Information des Ursprungsdokuments in das Zieldokument. Zu diesem Zweck soll den einzelnen Datenelementen des Dokuments, also den Knotentypen welche die eigentliche Information beinhalten, in dem ersten Format entsprechende Datenelemente in dem zweiten Format zugewiesen werden.

Im Rahmen der vorliegenden Erfindung findet diese Konvertierung auf der Grundlage von MasterSchemaDefinitionen statt. Jede MasterSchemaDefinition beinhaltet mindestens eine Zuordnung zwischen mindestens einem Datenelement von mindestens einem bereits bekannten Format und mindestens einem Datenelement einer sogenannten neutralen Struktur, dem MasterSchema. Es können somit auch mehrere Datenelemente eines bekannten Formats einem Datenelement des MasterSchemas zugeordnet werden, oder auch umgekehrt.

Mit neutraler Struktur beziehungsweise MasterSchema wird ein Format bezeichnet, in dem alle Datenelemente der berücksichtigten Formate in einer neutralen, einer Master-Form wiedergegeben werden. In Abhängigkeit von den Dokumenten die konvertiert werden sollen kann das MasterSchema selbst auch eine Struktur bestehend aus loop, segment, composite und element aufweisen. Allerdings sind auch hier andere Strukturen möglich. Die Struktur des MasterSchemas ist geeignet sich durch die Zuordnung neuer Formate immer wieder anzupassen. Dadurch läßt sich das MasterSchema jederzeit optimieren und erweitern, ohne daß dadurch die einzelnen Definitionen der bereits integrierten Formate modifiziert werden müssen. Diese Modifizierung wird Schemaevolution genannt. Das MasterSchema wird durch die fortwährende Integration von Formaten gebildet. Wenn in einem Format beispielsweise ein segment oder element vorkommt, das nicht den vorhandenen MasterElementen zugeordnet werden kann, wird in dem MasterSchema ein neues Element gebildet. Dieses neue Element bekommt dann den syntaktischen Namen des Elements, das für die Erweiterung verantwortlich ist. Alle Dokumentstrukturen von allen Formaten werden ausschließlich unter dem MasterSchema zugeordnet. Dadurch wird sichergestellt, daß keine Informationen verloren gehen, weil sich das MasterSchema an die integrierten Formate anpaßt.

Alle Knoten des MasterSchemas werden als MasterElemente bezeichnet. Zwischen den einzelnen MasterElementen können beispielsweise loop, segment, composite und element entsprechend der jeweiligen Funktion innerhalb der Struktur unterschieden werden.

In der MasterSchemaDefinition sind den Knoten des MasterSchemas, also den MasterElementen, entsprechende Informationen von anderen Formaten zugeordnet, die als TypenElemente bezeichnet werden. Diese TypenElemente beinhalten alle Informationen über den jeweiligen Knoten in einer für die MasterSchemaDefinition verständlichen Form. Die Zuordnung der TypenElemente zu den MasterElementen kann auf unterschiedlichste Weise realisiert werden.

Eine Möglichkeit ist, die zugeordneten TypenElemente als sogenannte Kindelemente von dem zugehörigen MasterElement abzuspeichern. Durch diese Zuordnung definieren die TypenElemente das jeweilige MasterElement für ein Format. Auch bei den TypenElementen gibt es eine Struktur, die beispielsweise mit den Begriffen loopType, segmentType, compositeType und elementType beschrieben werden können.

Alle im Rahmen der vorliegenden Erfindung verwendeten Formate werden über die Zuordnung zwischen MasterElementen und TypenElementen der neutralen Struktur zugeordnet. Diese Art der Zuordnung hat den Vorteil, daß keine Informationen verloren gehen, da sich die Referenzstruktur, nämlich die neutrale Struktur, immer an die integrierten Formate anpaßt und daß jedes integrierte Format über die Referenzstruktur konvertierbar ist.

Erfindungsgemäß wird ein Verfahren bereitgestellt, mit dem für Formate, die in den bestehenden MasterSchemaDefinitionen noch nicht berücksichtigt wurden, die MasterSchemaDefinition entsprechend angepaßt wird. Die Anpassung findet beispielsweise durch die Erstellung neuer TypenElemente und durch die Zuordnung von TypenElementen zu den entsprechenden MasterElementen statt. Diese Anpassung wird unter Verwendung eines Computer-Systems durchgeführt. Dabei umfaßt das Computer-System mindestens einen Prozessor, einen Speicher und eine Eingangs-/Ausgangsschnittstelle. Das hier verwendete Computer-System muß allerdings nicht eine bauliche Einheit darstellen. Die für die Durchführung des erfindungsgemäßen Verfahrens benötigten Ressourcen können beispielsweise auch durch ein Zusammenspiel von mehreren Computer-Systemen bereitgestellt werden, insbesondere durch eine Server-Client-Lösung.

Mit Hilfe dieses Computer-Systems wird eine Entscheidungsfunktion angewandt. Diese Entscheidungsfunktion entscheidet, welchen MasterElementen die TypenElemente eines bisher nicht berücksichtigten Formats am besten zugeordnet werden. Dabei können die TypenElemente bereits vorhandenen MasterElementen zugeordnet werden. Vorzugsweise kann das Computer-System darüber hinaus aufgrund des Ergebnisses der Entscheidungsfunktion neue MasterElemente in dem MasterSchema erstellen und diesen dann die TypenElemente zuordnen.

Diese Entscheidungsfunktion kann beispielsweise im Rahmen eines MasterBuilders angewandt werden. Dieser MasterBuilder unterstützt den Benutzer dahingehend, daß er dem Benutzer das Auffinden der MasterElemente erleichtert, denen die TypenElemente des neuen Formats zugeordnet werden sollen. Diese Erleichterung der Zuordnung kann durch eine halbautomatische oder eine vollautomatische Zuordnung durch den MasterBuilder stattfinden. Bei der halbautomatischen Zuordnung ist der Benutzer in den Zuordnungsprozeß eingebunden, d.h. der MasterBuilder liefert lediglich Vorschläge für die Zuordnung von TypenElementen an MasterElemente die der Benutzer annehmen oder ablehnen oder gegebenenfalls auch modifizieren kann. Bei der vollautomatischen Zuordnung versucht der MasterBuilder alle TypenElemente des neuen Formats geeigneten MasterElementen zuzuordnen, ohne daß der Benutzer um Bestätigung bzw. Korrektur gefragt wird.

Sowohl für die halbautomatische als auch für die vollautomatische Zuordnung wird die Entscheidungsfunktion verwendet. In dieser Entscheidungsfunktion können mehrere Kriterien einfließen, die unterschiedlich gewichtet werden können und auf deren Grundlage dann die Entscheidung bezüglich der Zuordnung durchgeführt werden kann. Grundsätzlich kann die Entscheidungsfunktion allerdings auch auf der Grundlage eines Kriteriums durchgeführt werden.

Ein Entscheidungskriterium kann beispielsweise die orthographische Ähnlichkeit zwischen dem Namen des TypenElements des neuen Formats und dem Namen eines MasterElements sein. Je größer die Ähnlichkeit ist, um so wahrscheinlicher ist die Richtigkeit der entsprechenden Zuordnung. Die Namen der Elemente befinden sich in sogenannten Attributen, die jeweils TypenElementen und MasterElementen zugeordnet sind. Neben den Namen können die Attribute auch weitere Informationen beinhalten, wie beispielsweise Informationen über das jeweilige Format und die Bedeutung. So können bei den Attributen beispielsweise Attribute unterschieden werden, die den Standard bzw. das Format beschreiben, Attribute die das Element bezeichnen, Attribute welche die Position des Elements beschreiben und Attribute welche die Darstellung der Elemente beschreiben. Jedes dieser Attribute kann die Grundlage für ein weiteres Entscheidungskriterium bilden.

Ein weiteres Kriterium ist beispielsweise die "Attraktivität" eines MasterElements ausgedrückt durch die Anzahl der TypenElemente, die bereits diesem MasterElement zugeordnet sind. Attraktive MasterElemente können bei der Zuordnung beispielsweise bevorzugt werden. Im Rahmen der vorliegenden Erfindung kann die Entscheidung auch auf der Grundlage der Anzahl der Verwendungen eines MasterElements bei Konvertierungen, durchgeführt werden. Zu diesem Zweck wird die Anzahl der Verwendungen bei der Konvertierung einer mehr oder weniger großen Zahl von Dokumenten mit Hilfe eines Zählers gezählt und zusammen mit dem jeweiligen Element gespeichert.

Darüber hinaus können auch sogenannte QualifierElemente als Entscheidungskriterium verwendet werden. Diese QualifierElemente sind MasterElementen zugeordnet und geben die Bedeutung des jeweiligen MasterElements wieder. So kann beispielsweise bei einem MasterElement zur Darstellung eines Datums mit einem QualifierElement qualifiziert werden, ob es sich um ein Zustelldatum, oder ein Bestelldatum handelt.

Die Qualität der Zuordnung durch den MasterBuilder hängt unter anderem von der Anzahl der Kriterien ab, die der Benutzer für das zuzuordnende Element hinterlegt hat.

Des weiteren hängt die Wahrscheinlichkeit für eine richtige Zuordnung von der Anzahl der integrierten Formate ab. Befinden sich in der MasterSchemaDefinition beispielsweise eine große Anzahl von Formaten, deren TypenElemente unter den jeweiligen MasterElementen eine Sammlung von orthographischen Ähnlichkeiten besitzen, kann die Wahrscheinlichkeit sehr hoch sein, daß die automatische Zuordnung ohne nachträgliche Veränderung bestehen bleiben kann, also richtig ist.

Im Rahmen der vorliegenden Erfindung wird außerdem ein Verfahren zur Konvertierung eines Dokuments mit Informationen in einem ersten Format in ein zweites Format mittels eines Computer-Systems beansprucht, wobei das Computer-System einen Prozessor, einen Speicher und eine Eingangs-/Ausgangsschnittstelle enthält, wobei das Dokument mindestens ein Datenelement enthält, wobei die Informationen des Dokuments in dem mindestens einen Datenelement angeordnet sind, und wobei das Verfahren die folgenden Schritte umfaßt:

- Empfangen des Dokuments in einem ersten Format über die Eingangs-/Ausgangsschnittstelle des Computer-Systems,
- Konvertieren des mindestens einen Datenelements des Dokuments von dem ersten Format in das zweite Format mit Hilfe des Prozessors auf der Grundlage mindestens einer MasterSchemaDefinition, wobei die MasterSchemaDefinition mindestens eine Zuordnung zwischen mindestens einem Datenelement eines MasterSchemas und jeweils mindestens einem Datenelement von mindestens einem anderen Format beinhaltet, und
- Senden des Dokuments in dem zweiten Format über die Eingangs-/Ausgangsschnittstelle des Computer-Systems.

Diese Konvertierung wird unter Verwendung eines Computer-Systems durchgeführt. Dabei umfaßt das Computer-System mindestens einen Prozessor, einen Speicher und eine Eingangs-/Ausgangsschnittstelle. Das hier verwendete Computer-System muß allerdings nicht eine bauliche Einheit darstellen. Die für die Durchführung des erfindungsgemäßen Verfahrens benötigten Ressourcen können beispielsweise auch durch ein Zusammenspiel von mehreren Computer-Systemen bereitgestellt werden, insbesondere in Form einer Server-Client-Konfiguration.

Das zu konvertierende Dokument wird über die Eingangs-/Ausgangsschnittstelle von dem Computer-System empfangen und das konvertierte Dokument wird über die Eingangs-/Ausgangsschnittstelle des Computer-Systems gesendet. So können die zu konvertierenden Dokumente und die bereits konvertierten Dokumente von diesen Schnittstellen aus über unterschiedlichste Netzwerke mit geeigneten Kommunikationsprotokollen von dem Sender empfangen und an den Empfänger gesendet werden. Zu diesem Zweck können die Dokumente in weitere Informationen eingebettet werden, die als Umschlag bezeichnet werden. Bei diesen weiteren Informationen kann es sich beispielsweise um die Adresse des Absenders oder des Empfängers handeln, oder um spezielle Informationen für die Weiterbearbeitung des Dokuments.

Die dazwischenliegende Konvertierung findet im Rahmen der vorliegenden Erfindung auf der Grundlage der MasterSchemaDefinitionen statt. Zu diesem Zweck werden die Elemente des zu konvertierenden Dokuments entsprechenden TypenElementen in der betreffenden MasterSchemaDefinition zugeordnet. Diese TypenElemente sind jeweils einem MasterElement zugeordnet. Um die Elemente des zu konvertierenden Dokuments in ein zweites Format zu konvertieren, werden nun TypenElemente gesucht, die dem gleichen oder einem entsprechenden MasterElement zugeordnet sind und dem gewünschten zweiten Format entsprechen.

Im Rahmen der vorliegenden Erfindung kann die Konvertierung des Datenelements von dem ersten Format in das zweite Format auch in zwei Schritten stattfinden. In dem ersten Schritt wird das eingehende Dokument in die sogenannte neutrale Struktur, das MasterSchema, konvertiert und in einem zweiten Schritt wird das Dokument in der neutralen Struktur in ein Dokument mit dem gewünschten Format konvertiert.

Im Rahmen der vorliegenden Erfindung kann dieser Übersetzungsprozess beispielsweise mit Hilfe eines sogenannten MasterTranslators durchgeführt werden. Dieser MasterTranslator weist in einem Schritt den eingehenden Elementen die entsprechenden MasterElemente zu und in einem weiteren Schritt die TypenElemente, die dem gewünschten Format entsprechen. Der MasterTranslator benötigt für die Konvertierung der Dokumente wiederum die Informationen aus den jeweiligen MasterSchemaDefinitionen.

Das erfindungsgemäße Verfahren zur Konvertierung eines Dokuments kann darüber hinaus noch Schritte zur Vor- oder Nachbereitung des Dokuments beinhalten. So können beispielsweise mit einer Art Eventkette mehrere Vorgänge, wie beispielsweise Komprimieren, Dekomprimieren, oder Verschlüsseln, Entschlüsseln durchgeführt werden. Solche oder auch andere Events können automatisch, immer oder in Abhängigkeit von bestimmten Bedingungen stattfinden.

Im Rahmen der vorliegenden Erfindung wird außerdem ein Verfahren zur Recherche von Informationen beansprucht, wobei die Anfrage zur Recherche mit Hilfe des Verfahrens zur Konvertierung von Dokumenten von dem ersten Format in ein zweites Format konvertiert wird und die Recherche dann auf der Grundlage dieser konvertierten Anfrage durchgeführt wird. Vorzugsweise handelt es sich hier bei dem zweiten Format um das MasterSchema.

Im folgenden werden Ausführungsformen der beanspruchten Verfahren beispielhaft anhand der Figuren 1 bis 7 beschrieben, wobei

Fig. 1    eine MasterTrilogie zeigt, mit der die erfindungsgemäßen Verfahren durchgeführt werden können,

Fig. 2    den Prozeß der Anpassung der MasterSchemaDefinition an ein neues Format zeigt,

Fig. 3    ein Beispiel für die Zuordnung von TypenElementen zu MasterElementen zeigt

Fig. 4    den Vorgang der Zuordnung von TypenElementen zu MasterElementen in einer MasterSchemaDefinition zeigt,

Fig. 5    die Erweiterung einer bestehenden MasterSchemaDefinition mit neuen MasterElementen durch die Anpassung an ein neues Format zeigt,

Fig. 6    ein Flußdiagramm zeigt, welches den Vorgang der Anpassung einer MasterSchemaDefinition an ein neues Format zeigt, und

Fig. 7    ein Beispiel für die Konvertierung eines Dokuments in einem Format A in ein anderes Format B, C oder D zeigt.

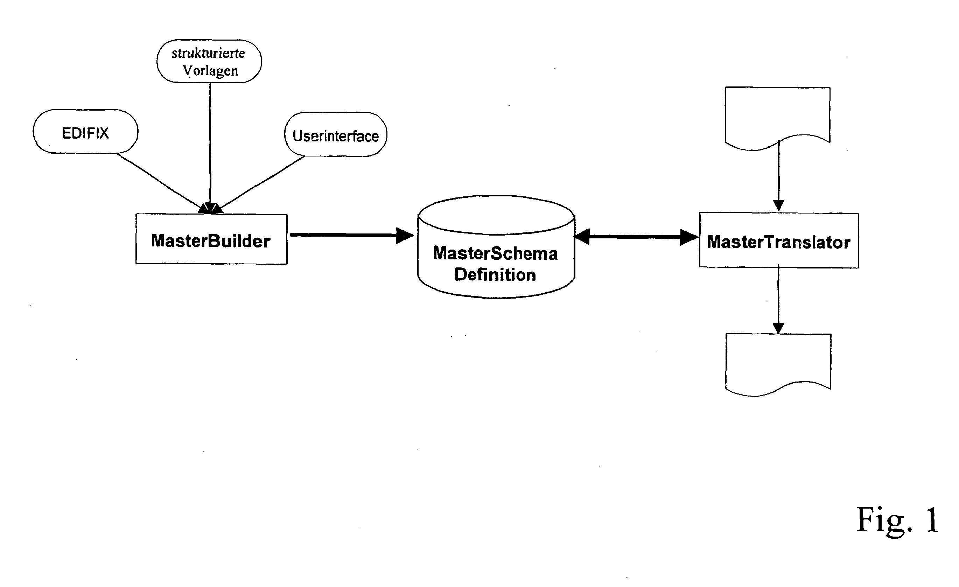

Die beanspruchten Verfahren können beispielsweise mit Hilfe einer sogenannten MasterTrilogie umgesetzt werden. In Fig. 1 wird ein Beispiel für eine derartige MasterTrilogie dargestellt. Diese MasterTrilogie enthält den MasterBuilder, die MasterSchemaDefinition und den sogenannten MasterTranslator.

Das Kernstück dieser MasterTrilogie ist die MasterSchemaDefinition. In dieser MasterSchemaDefinition werden alle Informationen über die verwendeten Formate in Beziehung zu einer sogenannten neutralen Struktur, dem sogenannten MasterSchema, für ein oder mehrere Datenelemente gesammelt beziehungsweise gespeichert. Diese Informationen werden mit Hilfe des MasterBuilders erstellt. Dieser Zusammenhang wird in Fig. 1 durch den Pfeil zwischen dem MasterBuilder und der MasterSchemaDefinition veranschaulicht. Der MasterTranslator wird zur Konvertierung von Dokumenten verwendet und greift zu diesem Zweck auf die MasterSchemaDefinition zu. Dies wird in Fig. 1 durch den Doppelpfeil zwischen der MasterSchemaDefinition und dem MasterTranslator veranschaulicht.

In der Praxis wird eine Vielzahl von MasterSchemaDefinitionen benötigt, um ein reales Dokument von einem Format in ein anderes umzuwandeln. Zum Zweck der Erklärung wird hier jedoch nur von einer MasterSchemaDefinition gesprochen, die dann stellvertretend für eine Vielzahl von MasterSchemaDefinitionen steht. Der MasterBuilder und der MasterTranslator existieren regelmäßig trotzdem nur einmal, d.h. der MasterBuilder und der MasterTranslator kommunizieren mit einer Vielzahl von MasterSchemaDefinitionen.

Im folgenden wird zuerst die Anpassung der MasterSchemaDefinition an ein neues bisher noch nicht berücksichtigtes Format mit Hilfe des MasterBuilders beispielhaft beschrieben.

Um ein Dokument in einem Format, welches bisher in der MasterSchemaDefinition noch nicht berücksichtigt wurde, mit Hilfe der MasterTrilogie in ein bekanntes Format konvertieren zu können, muß das bisher nicht berücksichtigte Format zuerst in die MasterSchemaDefinition importiert werden, das heißt die MasterSchemaDefinition muß entsprechend angepaßt werden.

Diese Aufgabe wird von dem sogenannten MasterBuilder durchgeführt. Wenn ein Benutzer einen neuen Standard, ein neues Format oder eine neue Dokumentenstruktur in das MasterSchema einfügen möchte, kann dies auf mehreren verschiedenen Wegen erfolgen, die in Fig. 1 beispielhaft dargestellt sind.

Wenn es sich um ein Format handelt, das beispielsweise bereits in einer EdiFix Datenbank vorhanden ist, können die in EdiFix vorhandenen Informationen dafür verwendet werden um in dem MasterBuilder die notwendige MasterSchemaDefinition zu erstellen. Des weiteren kann eine entsprechende MasterSchemaDefinition auch mit Hilfe von Strukturierten Vorlagen erstellt werden, wenn es sich beispielsweise um die Integration einer neuen DTD (Document Type Definition), eines neuen XML-Schemas, eines BizTalk-Schemas, eines Idoc-Parseroutputs, oder beispielsweise um die Integration eines DIRDEF-Dokuments handelt.

Neue Formate können allerdings auch durch die Verwendung des UserInterfaces an den MasterBuilder übergeben werden. Mit Hilfe eines derartigen UserInterfaces kann die Zuordnung der neutralen Struktur zu den einzelnen Formaten dargestellt werden. Das UserInterface ermöglicht darüber hinaus auch eine Modifikation der Zuordnung und beispielsweise die Anzeige von Fehlern.

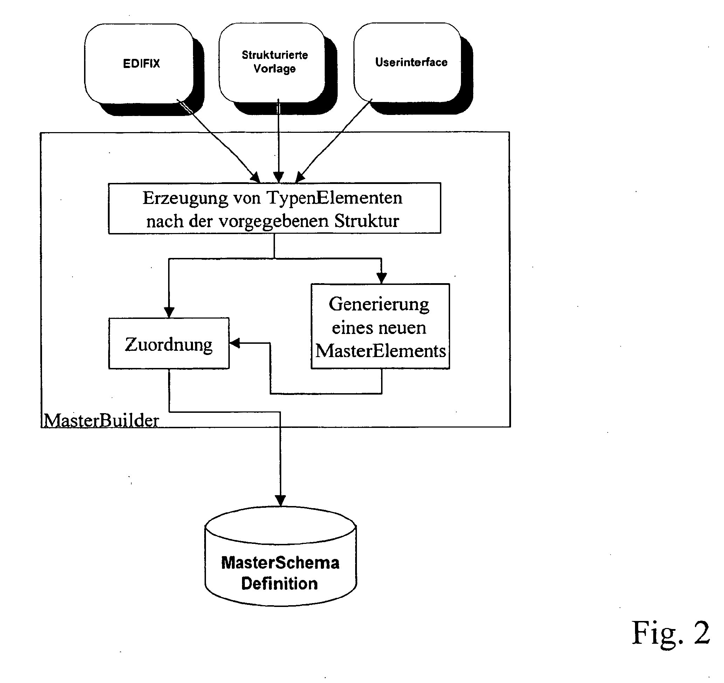

In Fig. 2 wird der Prozeß der Anpassung der MasterSchemaDefinition an das neue Format detaillierter dargestellt. In einem ersten Schritt werden aus den Informationen aus einer der oben genannten Quellen entsprechende TypenElemente erstellt. Hierbei werden die Informationen über das neue Format so aufgearbeitet, daß sie von der MasterSchemaDefinition verwendet werden können. Diese TypenElemente beinhalten unter anderem in Form von Attributen Informationen über das jeweilige Format.

In einem weiteren Schritt werden diese TypenElemente von dem MasterBuilder automatisch oder halbautomatisch in die MasterSchemaDefinition integriert. Diese Integration beinhaltet den Vorgang der Zuordnung, nämlich die Zuordnung der neuen TypenElemente zu den bereits in der MasterSchemaDefinition vorhandenen MasterElementen. Wenn ein neues TypenElement keinem MasterElement zugeordnet werden kann, wird ein neues MasterElement generiert, dem das neue TypenElement dann zugeordnet wird.

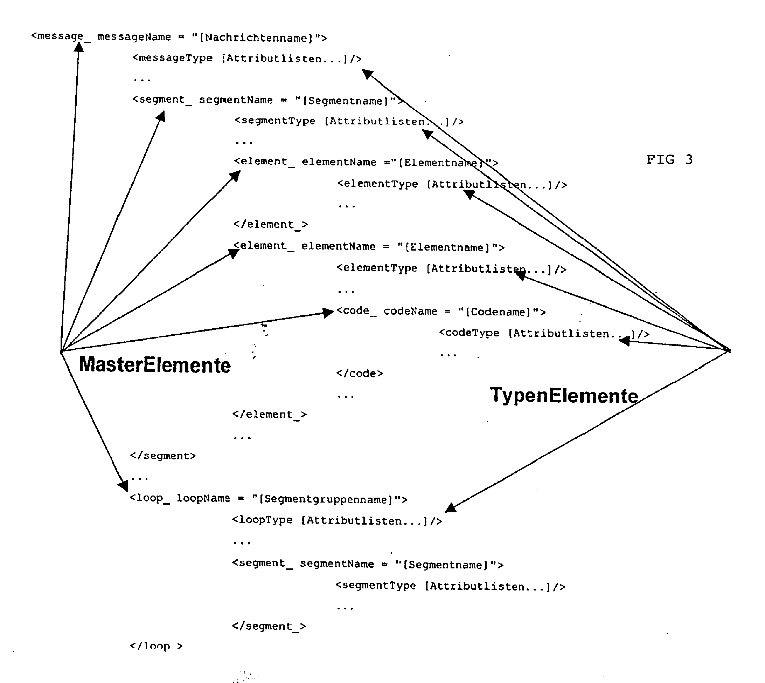

Fig. 3 zeigt eine Beispiel für eine solche Zuordnung, nämlich eine MasterSchemaDefinition. Diese MasterSchemaDefinition besteht unter anderem aus MasterElementen und aus TypenElementen. Dabei sind die zu den jeweiligen MasterElementen zugehörigen TypenElemente als sogenannte Kindelemente gespeichert. Das heißt, daß die TypenElemente, die Kindelemente des gleichen MasterElement sind, eine entsprechende Information beinhalten. In Fig. 3 wird diese Zuordnung durch einrücken der entsprechenden Kindelemente veranschaulicht.

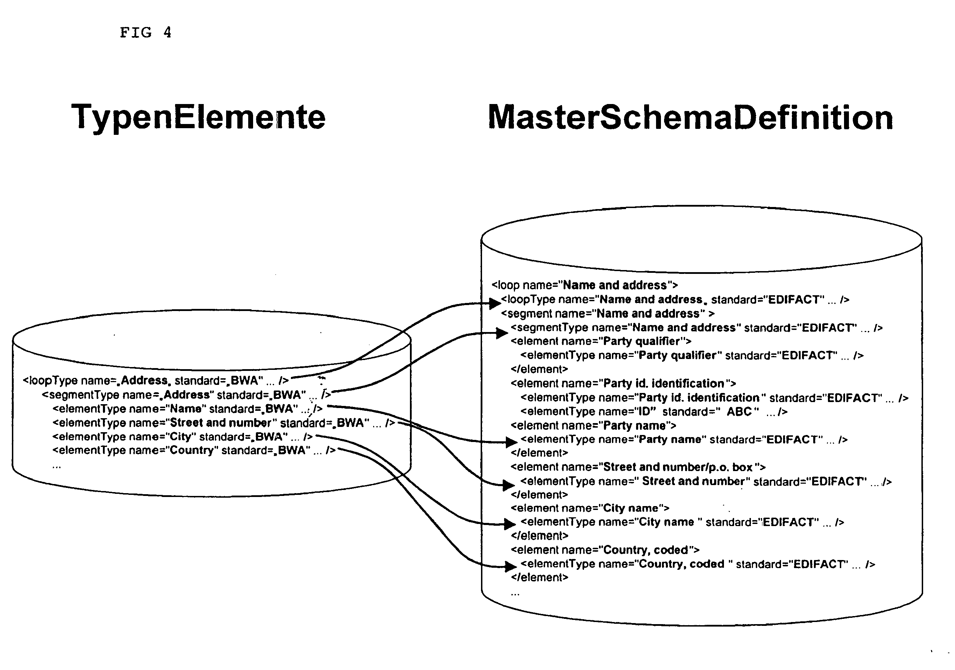

Fig. 4 veranschaulicht den Vorgang dieser Zuordnung. Auf der linken Seite ist die Beschreibung einer Adresse gemäß des neuen Formats mit Hilfe von TypenElementen beschrieben. Diese TypenElemente werden nun in die bereits vorhandene MasterSchemaDefinition integriert. Dementsprechend wird jedes TypenElement von dem neuen Format dem entsprechenden MasterElement zugeordnet. Diese Zuordnung wird in Fig. 4 mit Pfeilen veranschaulicht. Dabei beinhaltet die Zuordnung in diesem Zusammenhang das Importieren der TypenElemente und die Anordnung der TypenElemente in der MasterSchemaDefinition.

Wie bereits oben beschrieben, findet diese Zuordnung mit Hilfe einer Entscheidungsfunktion statt.

Im folgenden wird ein Beispiel beschrieben, in welchem ein Auftrag verarbeitet wird, dessen Struktur einem ersten Format entspricht. Die Informationen über dieses Format werden von dem MasterBuilder in die TypenElemente umgewandelt. Diese TypenElemente weisen eine Struktur auf, die mit loopType, segmentType, compositeType und elementType beschrieben wird. Dieses Format ist in dem vorliegenden Beispiel noch nicht in der MasterSchemaDefinition berücksichtigt. Aus diesem Grund muß die MasterSchemaDefinition diesbezüglich erweitert werden.

Der MasterBuilder führt für jede Zuordnung eines importierten TypenElements die Entscheidungsfunktion aus. Die Zuordnung an sich erfolgt auf algorithmischem Weg, unter Zuhilfenahme einer Heuristik. Die Heuristik wird durch die Auswertung von sogenannten Relevanzwahrscheinlichkeitslisten für unterschiedliche Kriterien realisiert. Das Ergebnis der Auswertung ist wieder eine Liste, die eine Abbildungsvorschrift von TypenElementen auf MasterElemente enthält.

Maßgeblich dafür, ob ein TypenElement einem bestimmten MasterElement zugeordnet werden soll oder nicht ist die sogenannte Relevanzwahrscheinlichkeit, die das TypenElement in bezug auf das MasterElement hat. Im folgenden wird die Berechnung dieser Relevanzwahrscheinlichkeit näher erläutert.

In einer bereits bestehenden MasterSchemaDefinition existieren die MasterElemente $m_1, \ldots, m_M$. Dabei ist M die Anzahl aller MasterElemente in dieser MasterSchemaDefinition. Mit t wird das zuzuordnende TypenElement bezeichnet und mit $k \in \mathbb{N}$ ein Kriterium für die Zuordnung.

Auf dieser Grundlage beschreibt die Relevanzwahrscheinlichkeit $P_k(t, m_i)$ die Wahrscheinlichkeit dafür, daß das Typenelement t dem MasterElement $m_i$ bezüglich des Kriteriums k zugeordnet werden sollte.

Die berechneten Relevanzwahrscheinlichkeiten hängen dabei in erster Linie von dem zugrundeliegenden Kriterium ab. Jedes Kriterium betrachtet einen anderen Aspekt. Die Kriterien werden dabei so ausgewählt, daß sich bei der Berücksichtigung aller Kriterien eine plausible Gesamtheuristik ergibt.

Im folgenden wird anhand eines Beispiels gezeigt, was unter der Relevanzwahrscheinlichkeit genau zu verstehen ist. Dabei wird als Kriterium k=1 die Übereinstimmung des Namens des Typenelements t mit dem Namen des MasterElement $m_i$ verwendet. Der Grad der Übereinstimmung der Namen kann beispielsweise mit einer Funktion bestimmt werden, die den Grad der orthographischen Übereinstimmung von zwei Namen auf eine Wahrscheinlichkeit abbildet. Die Bestimmung der Relevanzwahrscheinlichkeit könnte dann beispielsweise zu dem folgenden Ergebnis kommen:

$$t: \text{name="Name of buyer" und } m_1: \text{name="Buyer's name"} \qquad P_1(t, m_1) = 80\% .$$

$$t: \text{name="Name of buyer" und } m_2: \text{name="Buyer's address"} \qquad P_1(t, m_2) = 50\% .$$

$$t: \text{name="Name of buyer" und } m_3: \text{name="Supplier's name"} \qquad P_1(t, m_3) = 50\% .$$

$$t: \text{name="Name of buyer" und } m_4: \text{name="Supplier's address"} \qquad P_1(t, m_4) = 0\% .$$

In bezug auf das Kriterium k=1 sollte das TypenElement t also dem MasterElement $m_1$ zugeordnet werden. Um eine größtmögliche Übereinstimmung zu erzielen wird das zu importierende TypenElement nicht nur mit den MasterElementen verglichen, sondern auch mit allen TypenElementen, die den MasterElementen bereits zugeordnet sind.

Um das Ergebnis der Zuordnung weiter zu verbessern werden normalerweise mehrere Kriterien berücksichtigt und deren Bedeutung für die Zuordnung gewichtet. Dies ergibt dann die sogenannte Zuordnungswahrscheinlichkeit $P_{Zu}$

$$P_{Zu}(t, m_i) = \sum_k \omega_k \cdot P_k(t, m_i)$$

wobei $\omega_k$ das Gewicht für das Kriterium $k$ bezeichnet. Auf der Grundlage dieser Zuordnungswahrscheinlichkeit findet nun die Entscheidung statt, welchem MasterElement $m_i$ das TypenElement t zugeordnet wird. Dabei wird das TypenElement t dem MasterElement m; zugeordnet, das von allen MasterElementen die höchste Zuordnungswahrscheinlichkeit aufweist.

Im Rahmen der vorliegenden Erfindung kann die Zuordnung auf der Grundlage unterschiedlichster Kriterien stattfinden. In dem oben beschriebenen Beispiel wurde die orthographische Übereinstimmung der Namen der Elemente als ein Kriterium beschrieben. Darüber hinaus kann der Inhalt der Attribute als Kriterium für eine bestmögliche Entscheidung mitwirken. So kann beispielsweise das Attribut, welches die Position des Elements beschreibt, eine Rolle spielen. Ein weiteres Kriterium kann beispielsweise die Anzahl der TypenElemente sein, die einem MasterElement zugeordnet sind. Mit Hilfe eines Zählers kann beispielsweise auch die Anzahl der Transaktionen gezählt werde, bei denen das jeweilige MasterElement verwendet wurde, und auf der Grundlage dieser Anzahl eine Entscheidung über das Master-Element getroffen werden, dem ein TypenElement zugeordnet werden soll.

Bei der Berechnung der Zuordnungswahrscheinlichkeit spielt die Wichtung $\omega_k$ der Kriterien eine wesentliche Rolle. Im Rahmen der vorliegenden Erfindung wird vorzugsweise eine dynamische Wichtung vorgenommen.

Im Rahmen der vorliegenden Erfindung kann der MasterBuilder vor der Übermittlung der Zuordnungen an die MasterSchemaDefinition eine Konsistenz-Prüfung durchführen. Eine derartige Konsistenz-Prüfung, die auch als Plausibilitätsprüfung bezeichnet wird, kann beispielsweise auch mit der Hilfe von Attributen durchgeführt werden. In den entsprechenden Attributen wird dann beispielsweise ein Wertebereich angegeben, in dem der Inhalt des Elements liegen sollte. Wenn dies nicht der Fall ist, wird ein Fehler ausgegeben.

Statt einer Plausibilitätsprüfung kann in einer halbautomatischen Ausführungsform aber auch der Benutzer um Zustimmung zu der vorgeschlagenen Zuordnung gebeten werden. Schließlich können auch bestimmte Zuordnungen, die etwa sehr sicher sind, vollautomatisch, andere, die weniger sicher sind, nur nach einer ausdrücklichen Zustimmung des Benutzers oder aber zumindest keinem Widerspruch des Benutzers innerhalb einer bestimmten Frist vorgenommen werden.

Kommt innerhalb des zu importierenden Formats ein TypenElement vor, das nicht den vorhandenen Master-Elementen zugeordnet werden kann, wird durch den MasterBuilder ein neues MasterElement generiert. Der Name des jeweiligen MasterElements ist etwa der syntaktische Name des Elements, das für die Erweiterung verantwortlich ist.

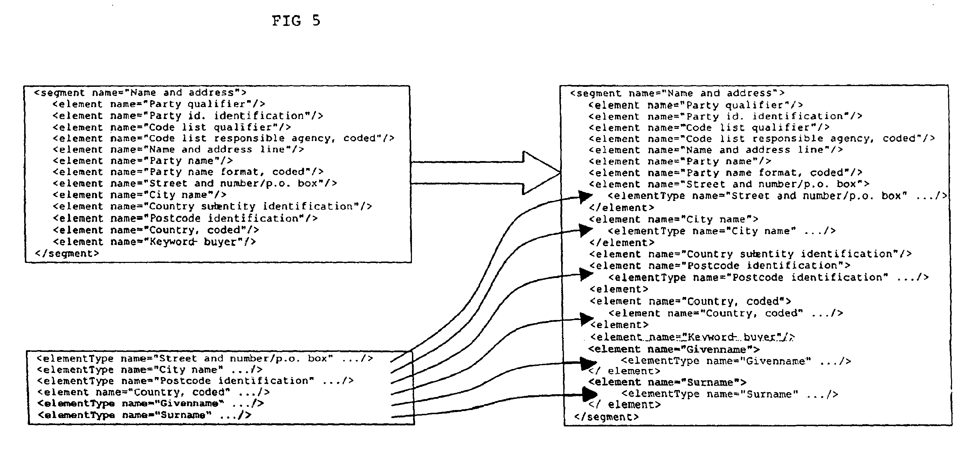

In Fig. 5 wird diese Erweiterung beispielhaft beschrieben. Das zu importierende Format und die bereits bestehende MasterSchemaDefinition sind auf der linken Seite dargestellt. Das zu importierende Format beinhaltet die folgenden TypenElemente: street and number, city name, postcode identification, country, givenname und surname. Die bereits bestehende MasterSchemaDefinition beinhaltet die entsprechenden MasterElemente street and number, city name, postcode identification und country, allerdings kein MasterElement für die Informationen givenname und surname.

Im Rahmen der Anpassung der MasterSchemaDefinition wird nun mit Hilfe der Entscheidungsfunktion den TypenElementen street and number, city name, postcode identification und country das entsprechende MasterElement zugeordnet. Da den TypenElementen givenname und surname kein entsprechendes MasterElement zugeordnet werden kann, wird im Rahmen der vorliegenden Erfindung ein entsprechendes MasterElement neu generiert. Diese neu generierten MasterElemente sind in der MasterSchemaDefinition auf der rechten Seite grau hinterlegt dargestellt.

Beim Importieren von neuen Formaten sind die TypenElemente in einer Struktur aufgebaut, die durch die Definitionen der Formate vorgegeben ist. Bei der Zuordnung der TypenElemente zu den entsprechenden MasterElementen gibt allerdings das MasterSchema die Reihenfolge an. Dies kann dazu führen, daß die TypenElemente an unterschiedlichen Positionen, die nicht der Ursprungsreihenfolge entsprechen, zugeordnet werden. Damit die Ursprungsreihenfolge aber doch eingehalten werden kann, werden den einzelnen TypenElementen entsprechende Attribute mitgegeben, welche die Ursprungsposition angeben. Dabei kann die Position mit Hilfe mehrerer Attribute dargestellt werden. So kann beispielsweise die absolute Position, also die Reihenfolge der einzelnen Elemente innerhalb des Dokuments, mit einem Attribut wiedergegeben werden. Dabei richtet sich die Positionsangabe nach den Vorgaben des Formats. Eine mögliche Realisierung ist es, in Anlehnung an die Bezeichnung von Kapitel in Büchern jede Position innerhalb einer Ebene um den Wert "eins" zu erhöhen, und jede Position in der darunterliegenden Ebene mit einem Punkt abzutrennen.

Mit Hilfe dieses erfindungsgemäßen Verfahrens werden die Informationen über die einzelnen Formate strukturiert und mit diversen Bezeichnern und Indexierungen und als MasterSchemaDefinition in einer Datenbank abgelegt und dienen so als Erfahrungsdatenbank für die Integration weiterer Standards, als Recherchendatenbank für eine präzise Suche von Daten, als Zuordnungsdefinition für die Konvertierung von Dokumenten und als Layoutinformation für die Erstellung von Dokumenten.

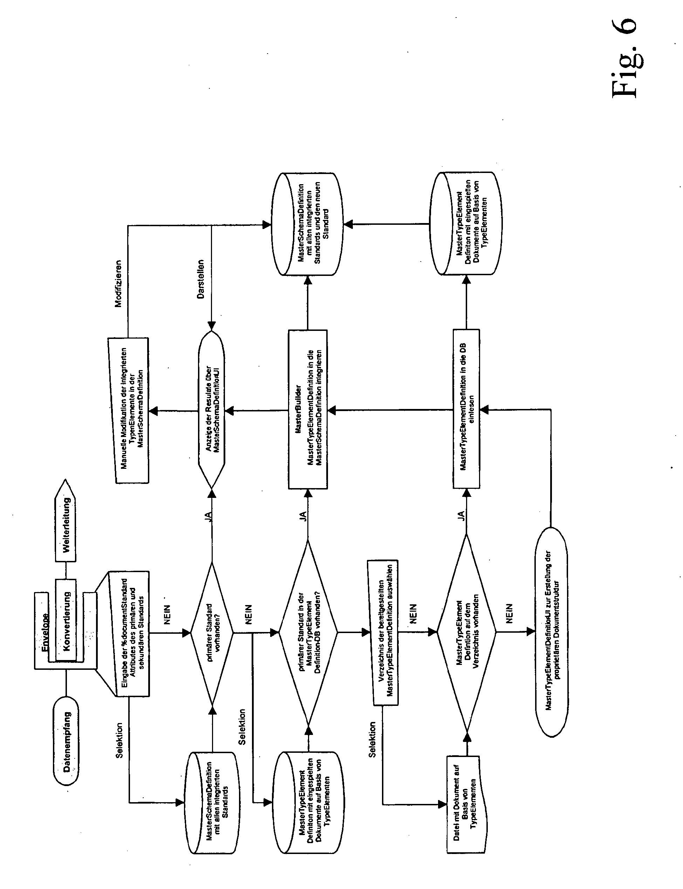

Wie Fig. 6 zeigt, kann beim Einspielen neuer Formate zuerst geprüft werden, ob das Format in der Master-SchemaDefinition z.B. in einem älteren Releasestand schon existiert. Ist dies der Fall, wird die existierende Master-SchemaDefinition angezeigt, um vom Benutzer modifiziert zu werden. Existiert noch keine Beschreibung für dieses Format, wird als nächstes nach bereits existierenden TypenElementen gesucht, z.B. ob bereits ein TypenElement mit dem Namen "Adresse" existiert. Alle gefundenen Treffer werden in die MasterSchemaDefinition für den Dokumenttyp übernommen und dem Anwender zur weiteren Bearbeitung angezeigt. Sollten die TypenElemente noch nicht in der MasterSchemaDefinition existieren, wird in einem Standard Set von TypenElementen nach passenden Elementen gesucht, die gefundenen in die MasterSchemaDefinition übernommen und dem Benutzer zur Weiterverarbeitung angezeigt. Sollte auch hier das System nicht erfolgreich sein, muß der Benutzer die Definition des TypenElements über das Benutzerinterface selbst erfassen.

Die mit diesem Verfahren erstellten MasterSchemaDefinitionen werden vom MasterTranslator für die Konvertierung von Dokumenten verwendet.

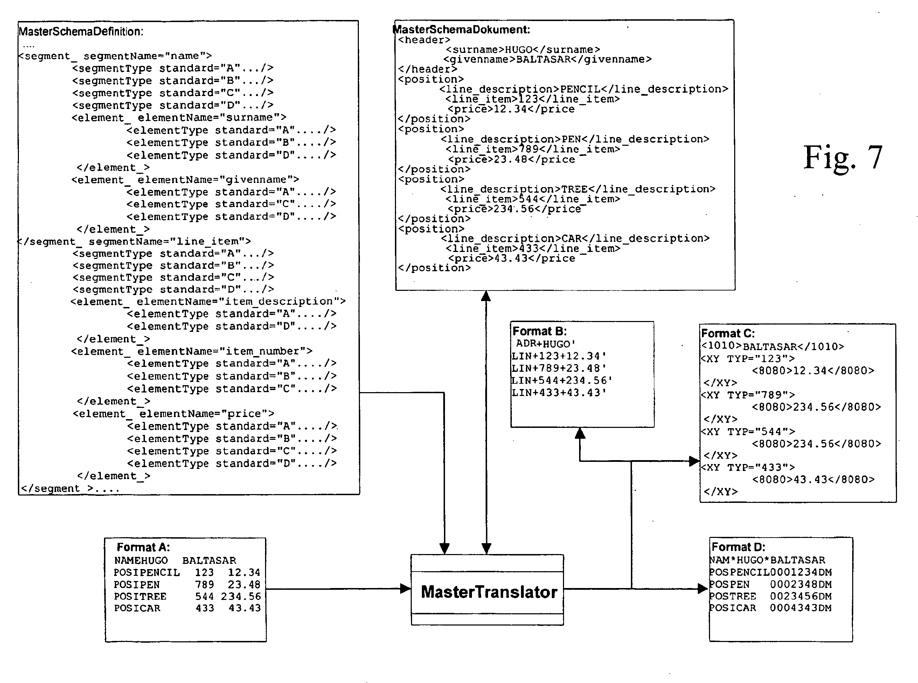

In Fig. 7 wird die Verwendung des MasterTranslators im Rahmen der MasterTrilogie beispielhaft dargestellt. Das zu konvertierende Dokument wird durch den MasterTranslator, der dafür die (beispielhaft für viele stehende) MasterSchemaDefinition verwendet, von einem ersten Format in ein zweites Format konvertiert.

Dieser Konvertierungsprozeß kann sowohl in einem Schritt, als auch in zwei Schritten stattfinden. Wenn die Konvertierung in zwei Schritten durchgeführt wird, wird das eingehende Dokument zuerst in das dem MasterSchema entsprechende Format und dann von diesem Format in das gewünschte Format konvertiert.

Wenn ein derartiger MasterTranslator ein Dokument in einem bestimmten Format in ein anderes Format konvertieren soll, dann extrahiert der MasterTranslator zuerst die Informationen aus der MasterSchemaDefinition, die für den Konvertierungsvorgang benötigt werden. Die Erstellung einer solchen Teilansicht findet auf der Grundlage der Attribute der Typenelemente statt, die angeben für welche Formate die jeweiligen TypenElemente gültig sind. Die Teilansicht enthält alle die MasterElemente und TypenElemente, die für diesen Konvertierungsvorgang notwendig sind. In diesen TypenElementen wird beispielsweise mit Hilfe von Attributen angegeben, wie der MasterTranslator mit den jeweiligen Elementen zu verfahren hat. Es handelt sich hierbei um sogenannte Steuerinformationen für den Master-Translator. Ein wesentliches Attribut ist dabei das Positionsattribut, welches angibt, an welcher Position das Element aus dem Dokument herauszulesen bzw. hereinzuschreiben ist. Dabei umfaßt der Begriff Position nicht nur die konkrete Stelle innerhalb des Dokuments, sondern die Position innerhalb der Struktur.

Die Konvertierung durch den MasterTranslator wird im folgenden beispielhaft mit dem in Fig. 7 gezeigten Übersetzungsprozeß beschrieben. In diesem Beispiel wird ein Dokument im Format A dem MasterTranslator zugeführt. Dieses Dokument besteht aus mehreren Begriffen und Zahlen, die entsprechend dem Format A angeordnet sind. Mit Hilfe des MasterTranslators kann dieses Dokument nun in ein entsprechendes Dokument in den Formaten B, C, oder D konvertiert werden. Um diese Konvertierung durchführen zu können benötigt der MasterTranslator eine MasterSchemaDefinition, in der alle vier Formate, nämlich A, B, C und D berücksichtigt sind. Eine solche MasterSchemaDefinition ist links in Fig. 7 dargestellt. Diese MasterSchemaDefinition besteht in diesem Beispiel aus zwei segmenten, nämlich dem segment "name" und dem segment "line_item". Das segment "name" ist wiederum in die elemente "surname" und "givenname" und das segment "line_item" in die elemente "item_description", "item_number" und "price" unterteilt.

Anhand dieser Auflistung der MasterSchemaDefinition ist bereits zu erkennen, daß nicht alle Informationen von allen Formaten unterstützt werden. Jedem Segment ist zwar ein entsprechender segmentType der vier Formate zugeordnet, bei den elemente ist dies allerdings nicht durchgängig der Fall. So sind im Format B die elemente "givenname" und "item_description", im Format C sind die elements "surname" und "item_description" und im Format D ist das element "item_number" nicht berücksichtigt.

Im Rahmen der vorliegenden Erfindung kann mit Hilfe von MasterSchemaDefinitionen ein MasterSchemaDokument erstellt werden, welches die Informationen des zu konvertierenden Dokuments in dem MasterSchema-Format darstellt. Ein Beispiel für so ein MasterSchemaDokument ist in Fig. 7 oben dargestellt. Es beinhaltet alle Informationen des zu konvertierenden Dokuments. Wenn dieses Dokument allerdings in eines der Formate B, C, oder D konvertiert wird, wird das Dokument nach der Konvertierung weniger Informationen enthalten, als das Ursprungsdokument, da in jedem der drei Formate mindestens ein Element, welches in dem Format A verwendet wird, nicht berücksichtigt ist. Auf der rechten Seite der Fig. 7 sind Beispiele für so konvertierte Dokumente dargestellt. Dabei fehlt in dem Dokument im Format B, wie erwartet, der Inhalt der element "givenname" und "item_description", bei dem Dokument im Format C der Inhalt der elements "surname" und "item_description" und bei dem Dokument im Format D das element "item_number".

Bei einem Teil der Datenelemente kann es vorkommen, daß die jeweiligen Informationen selber nicht in dem zweiten Format ausgedrückt werden können, aber eine entsprechende Information dargestellt werden kann. Dies kann beispielsweise das Lieferdatum sein. Wenn das Auftragsdokument beispielsweise in einem Format erstellt wird, in dem der Lieferzeitpunkt relativ zum Bestellzeitpunkt angegeben wird, zum Beispiel in zehn Tagen, und das zweite Format aber nur einen Liefertermin bestehend aus Tag, Monat und Jahr verarbeiten kann, können im Rahmen der Konvertierung zusätzlich noch Funktionen aufgerufen werden, die auf der Grundlage des zu konvertierenden Dokuments die Informationen für das konvertierte Dokument ermitteln. Dies kann, wie bei dem Beispiel mit dem Lieferzeitpunkt, eine mathematische Operation sein.

Im Rahmen der Konvertierung bzw. allgemein im Zusammenhang mit dem Empfangen und Senden von Dokumenten können auch Eventketten bestimmte Vorgänge durchführen. Hierbei handelt es sich um verschiedene Möglichkeiten der Vor- und der Nachbearbeitung der Dokumente. Beispiele für solche Eventketten sind Komprimierung und Dekomprimierung oder auch Verschlüsselung und Entschlüsselung.

Auf der Grundlage der MasterSchemaDefinitionen können im Rahmen der vorliegenden Erfindung auch noch weitere Funktionen basieren. So kann die MasterSchemaDefinition beispielsweise im Rahmen einer Recherche verwendet werden. Zu diesem Zweck werden die zu suchenden Dokumente in der neutralen Struktur gespeichert und auch der Suchauftrag so in das neutrale Format konvertiert, daß mit Hilfe dieser Angaben die Recherche durchgeführt werden kann.

**Patentansprüche**

1. Verfahren zur Anpassung von MasterSchemaDefinitionen zur Konvertierung mindestens eines Dokuments mit Informationen in einem ersten Format in ein zweites Format in einem Computer-System, wobei das Computer-System einen Prozessor, einen Speicher und eine Eingangs-/Ausgangsschnittstelle enthält, wobei das Dokument mindestens ein Format-spezifisches Datenelement aufweist, wobei die Formate jeweils eine Struktur aufweisen und wobei die Informationen des Dokuments in dem mindestens einen Datenelement in der Struktur angeordnet sind,

   wobei

   jede MasterSchemaDefinition mindestens eine Zuordnung zwischen mindestens einem Datenelement eines MasterSchemas und mindestens einem Datenelement mindestens eines anderen Formats beinhaltet, **dadurch gekennzeichnet, dass** das MasterSchema MasterElemente umfasst, welchen entsprechende Informationen von anderen Formaten in Form von TypenElementen zugeordnet sind, und dass das Computer-System Datenelemente von neuen Formaten unter Verwendung einer Entscheidungsfunktion den entsprechenden Datenelementen des MasterSchemas unter anderem auf der Grundlage der Position des Datenelements innerhalb der Struktur zuordnet, wobei TypenElemente aus Informationen über die neuen Formate erstellt werden und jedes dieser erstellten TypenElemente einem entsprechenden MasterElement zugeordnet wird.

2. Verfahren nach Anspruch 1, **dadurch gekennzeichnet, dass** die Entscheidungsfunktion mehre: noch weitere Entscheidungskriterien berücksichtigt.

3. Verfahren nach Anspruch 2, **dadurch gekennzeichnet, dass** die Entscheidungskriterien jeweils gewichtet werden.

4. Verfahren nach einem der Ansprüche 2 oder 3, **dadurch gekennzeichnet, dass** ein weiteres Entscheidungskriterium. die orthographische Ähnlichkeit der Namen von Datenelementen ist.

5. Verfahren nach einem der Ansprüche 2 bis 4, **dadurch gekennzeichnet, dass** ein weiters Entscheidungskriterium die Anzahl der Datenelemente anderer Formate ist, die dem Datenelement des MasterSchemas zugeordnet sind.

6. Verfahren nach einem der Ansprüche 2 bis 5, **dadurch gekennzeichnet, dass** ein weiteres Entscheidungskriterium die Anzahl der Verwendungen des mindestens einen Datenelements, das einem Datenelement des MasterSchemas zugeordnet ist, bei der Konvertierung von Dokumenten ist.

7. Verfahren nach einem der Ansprüche 1 bis 6, **dadurch gekennzeichnet, dass** vor der Zuordnung eines Datenelements von einem neuen Format zu einem Datenelement des MasterSchemas eine Konsistenz-Prüfung durchgeführt wird.

8. Verfahren nach einem der Ansprüche 1 bis 7, **dadurch gekennzeichnet, dass** die mindestens eine MasterSchemaDefinition durch eine Optimierungsfunktion verändert wird.

9. Verfahren zur Konvertierung eines Dokuments mit Informationen in einem ersten Format in ein zweites Format mittels eines Computer-Systems, wobei das Computer-System einen Prozessor, einen Speicher und eine Eingangs-/Ausgangsschnittstelle enthält, wobei das Dokument mindestens ein Datenelement enthält, wobei die Informationen des Dokuments in dem mindestens einen Datenelement angeordnet sind, und wobei das Verfahren die folgenden Schritte umfaßt:

   - Empfangen des Dokuments in einem ersten Format über die Eingangs-/Ausgangsschnittstelle des Computer-Systems,

- Konvertieren des mindestens einen Datenelements des Dokuments von dem ersten Format in das zweite Format mit Hilfe des Prozessors auf der Grundlage mindestens einer MasterSchemaDefinition, wobei die MasterSchemaDefinition mindestens eine mit dem Verfahrens gemäß einem der Ansprüche 1 bis 8 durchgeführte Zuordnung zwischen mindestens einem Datenelement eines MasterSchemas und mindestens einem Datenelement mindestens eines anderen Formats beinhaltet, und

- Senden des Dokuments in dem zweiten Format über die Eingangs-/Ausgangsschnittstelle des Computer-Systems.

10. Verfahren nach Anspruch 9, **dadurch gekennzeichnet, dass** zur Konvertierung des Dokuments von einem ersten Format in ein zweites Format das Dokument in einem ersten Format in einem ersten Schritt in ein MasterSchema-Dokument konvertiert wird und in einem zweiten Schritt das MästerSchema-Dokument in ein Dokument in einem zweiten Format konvertiert wird.

11. Verfahren nach einem der Ansprüche 9 oder 10, **dadurch gekennzeichnet, dass** zwischen den einzelnen Schritten jeweils Eventketten bestimmte Vorgänge durchführen.

12. Verfahren nach Anspruch 11, **dadurch gekennzeichnet, dass** die Eventketten in Abhängigkeit von bestimmten Bedingungen die Vorgänge durchführen.

13. Verfahren zur Recherche von Informationen, **dadurch gekennzeichnet, dass** eine Anfrage in einem ersten Format mit Hilfe des in den Ansprüchen 9 bis 12 beschriebenen Verfahrens in ein zweites Format konvertiert wird und dann auf der Grundlage der konvertierten Anfrage die Recherche durchgeführt wird.

14. Verfahren nach Anspruch 13, **dadurch gekennzeichnet, dass** das zweite Format das MasterSchema ist.

## Claims

1. Method for adjusting master scheme definitions for converting at least one document containing information in a first format to a second format in a computer system, the computer system including a processor, a memory and an input/output interface, the document having at least one format-specific data element, the formats respectively having a structure, and the information of the document being arranged in the at least one data element in the structure, wherein each master scheme definition includes at least one assignment between at least one data element of a master scheme and at least one data element of at least one different format, **characterized in that** the master scheme includes master elements to which corresponding information of different formats is assigned in the form of type elements, and by means of a decision function, the computer system assigns data elements of new formats to the corresponding data elements of the master scheme among other things based on the position of the data element within the structure, wherein type elements are created from information on the new formats and each of the created type elements is assigned to a corresponding master element.

2. Method according to claim 1, **characterized in that** the decision function takes into account several or further decision criteria.

3. Method according to claim 2, **characterized in that** the decision criteria are weighted respectively.

4. Method according to one of claims 2 or 3, **characterized in that** one further decision criterion is the orthographic similarity of the names of data elements.

5. Method according to one of claims 2 to 4, **characterized in that** one further decision criterion is the number of the data elements of different formats which are assigned to the data element of the master scheme.

6. Method according to one of claims 2 to 5, **characterized in that** one further decision criterion is the number of uses of the at least one data element during document conversion, the at least one data element being assigned to a data element of the master scheme.

7. Method according to one of claims 1 to 6, **characterized in that** prior to assigning a data element from a new format to a data element of the master scheme, a consistency check is performed.

8. Method according to one of claims 1 to 7, **characterized in that** the at least one master scheme definition is changed by an optimization function.

9. Method for converting a document containing information in a first format to a second format by means of a computer system, the computer system including a processor, a memory and an input/output interface, the document including at least one data element, the information of the document being arranged in the at least one data element, wherein the method comprises the steps of:

> Receiving the document in a first format via the input/output interface of the computer system,
> Converting the at least one data element of the document from the first format to the second format by means of the processor based on at least one master scheme definition, wherein the master scheme definition includes at least one assignment between at least one data element of a master scheme and at least one data element of at least one different format, the assignment being performed by means of a method according to one of claims 1 to 8, and
> Sending the document in the second format via the input/output interface of the computer system.

10. Method according to claim 9, **characterized in that** for converting the document from a first format to a second format, the document in a first format is converted to a master scheme document in a first step and the master scheme document is converted to a document in a second format in a second step.

11. Method according to any of claims 9 or 10, **characterized in that** between the individual steps, event chains respectively perform certain operations.

12. Method according to claim 11, **characterized in that** the event chains perform the operations based on certain conditions.

13. Method for researching information, **characterized in that** a request in a first format is converted to a second format by means of the method according to claims 9 to 12 whereupon the research is performed based on the converted request.

14. Method according to claim 13, **characterized in that** the second format is the master scheme.

## Revendications

1. Procédé d'adaptation de *Définitions Schéma Maître* pour la conversion d'au moins un document avec des informations dans un premier format dans un deuxième format dans un système informatique, sachant que le système informatique contient un processeur, une mémoire et une interface d'entrée/sortie, sachant que le document présente au moins un élément de données spécifique pour le format, sachant que les formats présentent respectivement une structure et sachant que les informations du document sont disposées dans la structure dans le au moins un élément de données,
sachant que
chaque *Définition Schéma Maître* contient au moins une attribution entre au moins un élément de données d'un *Schéma Maître* et au moins un élément de données d'au moins un autre format, **caractérisé en ce que** le *Schéma Maître* comprend des *Eléments Maître*, auxquels sont attribuées des informations correspondantes d'autres formats sous forme *d'Eléments Type*, et que le système informatique attribue, en utilisant une fonction de décision, des éléments de données de nouveaux formats aux éléments de données correspondants du *Schéma Maître* entre autre sur la base de la position de l'élément de donnée à l'intérieur de la structure, sachant que des *Eléments Type* sont créés à partir d'informations sur les nouveaux formats et que chacun de ces *Eléments Type* créés est attribué à un *Elément Maître* correspondant.

2. Procédé d'après la revendication 1, **caractérisé en ce que** la fonction de décision tient compte d'autres critères décisionnels.

3. Procédé d'après la revendication 2, **caractérisé en ce que** les critères décisionnels reçoivent respectivement une pondération.

4. Procédé d'après une des revendications 2 ou 3, **caractérisé en ce qu'**un critère décisionnel supplémentaire est la similarité orthographique des noms d'éléments de données.

5.  Procédé d'après une des revendications de 2 à 4, **caractérisé en ce qu'**un critère décisionnel supplémentaire est le nombre des éléments de données d'autres formats, attribués à l'élément de données du *Schéma Maître.*

6.  Procédé d'après une des revendications de 2 à 5, **caractérisé en ce qu'**un critère décisionnel supplémentaire est le nombre d'utilisations de ou des éléments de données attribués à un élément de données du *Schéma Maître* dans le cadre de la conversion de documents.

7.  Procédé d'après une des revendications de 1 à 6, **caractérisé en ce qu'**avant d'attribuer un élément de données d'un nouveau format à un élément de données du *Schéma Maître* on effectue un contrôle de consistance.

8.  Procédé d'après une des revendications de 1 à 7, **caractérisé en ce que** la ou les *Définitions Schéma Maître* sont modifiées par une fonction d'optimisation.

9.  Procédé pour la conversion d'un document avec des informations dans un premier format dans un deuxième format au moyen d'un système informatique, sachant que le système informatique contient un processeur, une mémoire et une interface d'entrée/sortie, sachant que le document présente au moins un élément de données, sachant que les informations du document sont disposées dans le au moins un élément de données, et sachant que le procédé comprend les étapes suivantes :

    - Recevoir le document dans un premier format via l'interface d'entrée/sortie du système informatique,
    - Convertir le ou les éléments de données du document à partir du premier format au deuxième format grâce au processeur sur la base d'au moins une *Définition Schéma Maître*, sachant que la *Définition Schéma Maître* contient au moins une attribution, effectué avec le procédé d'après une des revendications de 1 à 8, entre au moins un élément de données d'un *Schéma Maître* et au moins un élément de données d'au moins un autre format, et
    - Envoyer le document dans le deuxième format via l'interface d'entrée/sortie du système informatique.

10. Procédé d'après la revendication 9, **caractérisé en ce que** pour convertir le document d'un premier format dans un deuxième format le document dans un premier format est converti dans une première étape en un Document-*Schéma Maître* et que dans une deuxième étape le Document-*Schéma Maître* est converti en un document dans un deuxième format.

11. Procédé d'après une des revendications 9 ou 10, **caractérisé en ce que** entre chaque étape des chaînes d'événements effectuent respectivement certaines opérations.

12. Procédé d'après la revendication 11, **caractérisé en ce que** les chaînes d'événements effectuent les opérations en fonction de certaines conditions spécifiques.

13. Procédé pour la recherche d'informations, **caractérisé en ce qu'**une requête dans un premier format est convertie dans un deuxième format à l'aide du procédé décrit dans les revendications de 9 à 12 et que la recherche est ensuite effectuée sur la base de la requête convertie.

14. Procédé d'après la revendication 13, **caractérisé en ce que** le deuxième format est le *Schéma Maître.*

EP 1 239 375 B1

MasterTranslator

MasterSchema
Definition

Userinterface

strukturierte
Vorlagen

MasterBuilder

EDIFIX

Fig. 1

14

EDIFIX

Strukturierte Vorlage

Userinterface

Erzeugung von TypenElementen nach der vorgegebenen Struktur

Zuordnung

Generierung eines neuen MasterElements

MasterBuilder

MasterSchema Definition

Fig. 2

```
<message_ messageName = "[Nachrichtenname]">
        <messageType [Attributlisten...]/>
        ...
        <segment_ segmentName = "[Segmentname]">
                <segmentType [Attributlisten...]/>
                ...
                <element_ elementName ="[Elementname]">
                        <elementType [Attributlisten...]/>
                        ...
                </element_>
                <element_ elementName = "[Elementname]">
                        <elementType [Attributlisten...]/>
                        ...
                        <code_ codeName = "[Codename]">
                                <codeType [Attributlisten...]/>
                                ...
                        </code>
                        ...
                </element_>
                ...
        ...
        <loop_ loopName = "[Segmentgruppenname]">
                <loopType [Attributlisten...]/>
                ...
                <segment_ segmentName = "[Segmentname]">
                                <segmentType [Attributlisten...]/>
                                ...
                </segment_>
        </loop >
```

FIG 3

MasterElemente

TypenElemente

EP 1 239 375 B1

## FIG 4

# TypenElemente

# MasterSchemaDefinition

```
<loopType name=.Address, standard=.BWA" ... />
    <segmentType name=.Address" standard=.BWA" ... />
        <elementType name="Name" standard=.BWA" ... />
        <elementType name="Street and number" standard=.BWA" ... />
        <elementType name="City" standard=.BWA" ... />
        <elementType name="Country" standard=.BWA" ... />
    ...
```

```
<loop name="Name and address">
    <loopType name="Name and address, standard="EDIFACT" ... />
    <segment name="Name and address" >
        <segmentType name="Name and address" standard="EDIFACT" ... />
        <element name="Party qualifier">
            <elementType name="Party qualifier" standard="EDIFACT" ... />
        </element>
        <element name="Party id. identification">
            <elementType name="Party id. identification" standard="EDIFACT" ... />
            <elementType name="ID" standard=" ABC " ... />
        <element name="Party name">
            <elementType name="Party name" standard="EDIFACT" ... />
        </element>
        <element name="Street and number/p.o. box ">
            <elementType name=" Street and number" standard="EDIFACT" ... />
        </element>
        <element name="City name">
            <elementType name="City name " standard="EDIFACT" ... />
        </element>
        <element name="Country, coded">
            <elementType name="Country, coded " standard="EDIFACT" ... />
        </element>
    ...
```

EP 1 239 375 B1

FIG 5

```
<segment name="Name and address">
    <element name="Party qualifier"/>
    <element name="Party id. identification"/>
    <element name="Code list qualifier"/>
    <element name="Code list responsible agency, coded"/>
    <element name="Name and address line"/>
    <element name="Party name"/>
    <element name="Party name format, coded"/>
    <element name="Street and number/p.o. box"/>
    <element name="City name"/>
    <element name="Country subentity identification"/>
    <element name="Postcode identification"/>
    <element name="Country, coded"/>
    <element name="Keyword buyer"/>
</segment>
```

```
<elementType name="Street and number/p.o. box" .../>
<elementType name="City name" .../>
<elementType name="Postcode identification" .../>
<element name="Country, coded" .../>
<elementType name="Givenname" .../>
<elementType name="Surname" .../>
```

```
<segment name="Name and address">
    <element name="Party qualifier"/>
    <element name="Party id. identification"/>
    <element name="Code list qualifier"/>
    <element name="Code list responsible agency, coded"/>
    <element name="Name and address line"/>
    <element name="Party name"/>
    <element name="Party name format, coded"/>
    <element name="Street and number/p.o. box">
        <elementType name="Street and number/p.o. box" .../>
    </element>
    <element name="City name">
        <elementType name="City name" .../>
    </element>
    <element name="Country subentity identification"/>
    <element name="Postcode identification">
        <elementType name="Postcode identification" .../>
    <element>
    <element name="Country, coded">
        <element name="Country, coded" .../>
    <element>
    <element name="Keyword buyer"/>
    <element name="Givenname">
        <elementType name="Givenname" .../>
    </ element>
    <element name="Surname">
        <elementType name="Surname" .../>
    </ element>
</segment>
```

EP 1 239 375 B1

Datenempfang → Envelope Konvertierung → Weiterleitung

Selektion

Eingabe der %documentStandard Attributes des primären und sekundären Standards

Manuelle Modifikation der integrierten TypenElemente in der MasterSchemaDefinition — Modifizieren

NEIN

MasterSchemaDefinition mit allen integrierten Standards

primärer Standard vorhanden? — JA → Anzeige der Resulate über MasterSchemaDefinitionUI ← Darstellen

Selektion

NEIN

MasterTypeElement Definiton mit eingespielten Dokumente auf Basis von TypeElementen

primärer Standard in der MasterTypeElement Definition-DB vorhanden? — JA → MasterBuilder MasterTypeElementDefinition in die MasterSchemaDefinition integrieren → MasterSchemaDefinition mit allen integrierten Standards und den neuen Standard

Selektion

Verzeichnis der bereitgestellten MasterTypeElementDefinition auswählen

NEIN

Datei mit Dokument auf Basis von TypeElementen

MasterTypeElement Definiton auf dem Verzeichnis vorhanden — JA → MasterTypeElementDefinition in die DB einlesen → MasterTypeElement Definiton mit eingespielten Dokumente auf Basis von TypeElementen

NEIN

MasterTypeElementDefinitionUI zur Erstellung der proprietären Dokumentstruktur

Fig. 6

```
MasterSchemaDefinition:
....
<segment_ segmentName="name">
       <segmentType standard="A".../>
       <segmentType standard="B".../>
       <segmentType standard="C".../>
       <segmentType standard="D".../>
       <element_ elementName="surname">
              <elementType standard="A"..../>
              <elementType standard="B"..../>
              <elementType standard="D"..../>
       </element_>
       <element_ elementName="givenname">
              <elementType standard="A"..../>
              <elementType standard="C"..../>
              <elementType standard="D"..../>
       </element_>
</segment_ segmentName="line_item">
       <segmentType standard="A".../>
       <segmentType standard="B".../>
       <segmentType standard="C".../>
       <segmentType standard="D".../>
       <element_ elementName="item_description">
              <elementType standard="A"..../>
              <elementType standard="D"..../>
       </element_>
       <element_ elementName="item_number">
              <elementType standard="A"..../>
              <elementType standard="B"..../>
              <elementType standard="C"..../>
       </element_>
       <element_ elementName="price">
              <elementType standard="A"..../>.
              <elementType standard="B"..../>
              <elementType standard="C"..../>
              <elementType standard="D"..../>
       </element_>
</segment_>....
```

```
MasterSchemaDokument:
<header>
       <surname>HUGO</surname>
       <givenname>BALTASAR</givenname>
</header>
<position>
       <line_description>PENCIL</line_description>
       <line_item>123</line_item>
       <price>12.34</price
</position>
<position>
       <line_description>PEN</line_description>
       <line_item>789</line_item>
       <price>23.48</price
</position>
<position>
       <line_description>TREE</line_description>
       <line_item>544</line_item>
       <price>234.56</price
</position>
<position>
       <line_description>CAR</line_description>
       <line_item>433</line_item>
       <price>43.43</price
</position>
```

# Fig. 7

**Format B:**
```
ADR+HUGO'
LIN+123+12.34'
LIN+789+23.48'
LIN+544+234.56'
LIN+433+43.43'
```

**Format C:**
```
<1010>BALTASAR</1010>
<XY TYP="123">
       <8080>12.34</8080>
</XY>
<XY TYP="789">
       <8080>234.56</8080>
</XY>
<XY TYP="544">
       <8080>234.56</8080>
</XY>
<XY TYP="433">
       <8080>43.43</8080>
</XY>
```

**Format A:**
```
NAMEHUGO    BALTASAR
POSIPENCIL   123   12.34
POSIPEN      789   23.48
POSITREE     544 234.56
POSICAR      433   43.43
```

**MasterTranslator**

**Format D:**
```
NAM*HUGO*BALTASAR
POSPENCIL0001234DM
POSPEN    0002348DM
POSTREE   0023456DM
POSICAR   0004343DM
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5911074 A